# EUROPÄISCHE PATENTSCHRIFT

(11) **EP 2 513 922 B1**
(45) Veröffentlichungstag und Bekanntmachung des Hinweises auf die Patenterteilung: **22.01.2020**
(21) Anmeldenummer: 10801156.0
(22) Anmeldetag: 17.12.2010
(51) Int. Cl.: H01F 27/06, H01F 38/28

(54) **VORRICHTUNG ZUR LÖSBAREN BEFESTIGUNG EINES STROMLEITERS AN EINEM STROMWANDLERGEHÄUSE**
DEVICE FOR REMOVABLY FIXING A CONDUCTOR TO A CURRENT TRANSFORMER HOUSING
DISPOSITIF DE FIXATION AMOVIBLE D'UN CONDUCTEUR ÉLECTRIQUE À UN BOÎTIER DE CONVERTISSEUR DE COURANT

(30) Priorität: 17.12.2009 DE 102009059007
(43) Veröffentlichungstag der Anmeldung: 24.10.2012
(73) Patentinhaber: Phoenix Contact GmbH & Co. KG, 32825 Blomberg (DE)
(72) Erfinder: LEIFER, Christoph, 33014 Bad Driburg (DE); THÖRNER, Carsten, 49324 Melle (DE); TRINH, Dat-Minh, 32683 Barntrup (DE)
(74) Vertreter: Michalski Hüttermann & Partner Patentanwälte mbB
(86) Internationale Anmeldenummer: PCT/EP2010/070164
(87) Internationale Veröffentlichungsnummer: WO 2011/073434

(56) Entgegenhaltungen:
- EP-A2- 1 217 230
- DE-A1- 19 733 852
- JP-A- 2000 055 025
- JP-U- S49 593
- US-A- 2 290 900
- US-A- 3 878 757

## Beschreibung

Die Erfindung betrifft eine Vorrichtung zur lösbaren Befestigung eines Stromleiters an einem Stromwandlergehäuse mittels eines Befestigungselementes, welches durch ein am Stromwandlergehäuse angeordnetes Halteelement geführt ist und in einem befestigten Zustand des Stromleiters an dem Stromwandlergehäuse zumindest teilweise an der Oberfläche des Stromleiters anliegt.

Ein Stromleiter wird üblicherweise durch eine an dem Stromwandlergehäuse vorgesehene Öffnung geführt. Die Befestigung des Stromleiters an dem Stromwandlergehäuse erfolgt üblicherweise über zwei Schrauben oder Gewindestifte, welche in zwei an dem Stromwandlergehäuse angeordneten Halteelementen geführt sind. Zur Befestigung werden die Schrauben bzw. die Gewindestifte innerhalb der Halteelemente durch eine rein rotatorische Bewegung in Richtung des Stromleiters gedreht bis sie mit ihrer Querschnittsfläche auf der Oberfläche des Stromleiters aufliegen. Durch ein weiteres Drehen der Schrauben bzw. der Gewindestifte erfolgt die Fixierung des Stromleiters an dem Stromwandlergehäuse.

Nachteilig hierbei ist, dass die Schrauben bzw. die Gewindestifte einen relativ langen Weg zur Befestigung an dem Stromleiter zurücklegen müssen, wobei die ausschließlich durch eine rein rotatorische Bewegung erfolgt, was sehr kraftaufwändig und zeitintensiv ist, insbesondere bei einer größeren Anzahl zu fixierender Stromwandlergehäuse an einem Stromleiter.

Aus der DE 197 33 852 A1 ist eine Montageanordnung für einen Stromleiter an einem Stromwandlergehäuse bekannt, die ein Stromwandlergehäuse und ein Befestigungselement aufweist, wobei der Stromleiter lösbar befestigbar ist. Das Befestigungselement liegt in einem befestigten Zustand des Stromwandlergehäuses zumindest teilweise an der Oberfläche des Stromleiters auf.

Die US 2 290 900 A betrifft einen Verbinder zur Verbindung eines Kabels mit einem Batterieanschluss, insbesondere einen Verbinder mit einem sehr einfachen Aufbau, und der einen Basiselement oder Körperelement beinhaltet, die aus einem Kunststoffmaterial wie zum Beispiel harten, vulkanisierten Fasern anstelle von Metall gefertigt sind. Dadurch kann eine Einsparung bei Messing oder Blei, aus denen die besagten Elemente üblicherweise hergestellt sind, zu erreichen. Zusätzlich wird ein Element bereitgestellt, das nicht korrosionsanfällig ist, so dass es nach dem Lösen einfach von einem Batteriekontakt entfernt werden, ohne dass es losgeschlagen werden müsste, wodurch die Batterie beschädigt werden könnte.

Die JP 2000/055025A betrifft eine Verkürzung einer Verschraubungszeit und eine einfache Durchführung einer Verschraubung durch ein Teilen und Formen beider Schraubenteile eines Schraubmechanismus einer Kombination einer männlichen Schraube und einer weiblichen Schraube. Männliche Schraubenwindungen werden an einem Teil einer Umfangsfläche der männlichen Schraube mit einem Schneidteil geformt. Diese männlichen Schraubenwindungen sind symmetrisch angeordnet mit einem Winkel von etwas weniger als 90° für die Mitte der männlichen Schraube. Ein weiblicher Teil eines hohlen, zylindrischen Metallstücks hat einen Außendurchmesser, der geringfügig größer als die männliche Schraube ist. Weibliche Schraubenwindungen sind an einem Teil einer inneren Umfangsfläche der weiblichen Schraube mit einem Schneidteil geformt. Diese weiblichen Schraubenwindungen sind symmetrisch angeordnet mit einem Winkel von etwas weniger als 90° für die Mitte der weiblichen Schraube. Diese Ausgestaltung ist effektiv, wenn die Anzahl der Windungen groß ist, so dass insbesondere die Arbeitszeit verkürzt werden kann. Zum Verschrauben ist ein Niveau in einem Unterscheidungsteil erforderlich bei der männlichen Schraube oder bei der weiblichen Schraube. Dadurch kann das Verschrauben einfach durchgeführt werden, indem das Niveau in dem Unterscheidungsteil kleiner als das Schneidteil der männlichen Schraube einer Umfangsrichtung ist.

Aus der EP 1 217 230 A2 ist eine Schnellbefestigungsmutter bekannt. Die Schnellbefestigungsmutter besitzt eine Öffnung mit von einem Tragteil ausgestellten Rastklinken. Beim Einschieben eines Gewindeschaftes weichen diese elastisch aus und verklemmen sich bei einer entgegengesetzten Zugbelastung des Gewindeschaftes gegen dessen Gewindegänge. Zur Verbesserung der möglichen Spannkräfte in der Schraubverbindung wird vorgeschlagen, wenigstens im Bereich der Rastklinken den Abstand zwischen der Wandung und dem Gewindeaußendurchmesser des Gewindeschaftes unter die Materialstärke der Rastklinke zu verkleinern. Die gesteigerte Knickstabilität der einzelnen Rastklinken erlaubt höhere Anzugsmomente des Gewindeschaftes und damit höhere Spannkräfte in der Schraubverbindung.

Weiter ist aus der US 3 878 757 A eine verschiebbare Mutter zum Eingriff mit einem Gewindeschaft einer in entweder einem axial verschiebbaren Modus oder einem konventionellen Gewindeeingriffsmodus. Die Mutter umfasst mittel zum automatischen sichern der Mutter in einem Gewindeeingriffsmodus, wenn der Schaft in einer im Wesentlichen vertikalen Position ist, und eine lasttragende Oberfläche der Mutter im Wesentlichen normal dazu ist. Die automatischen Sicherungsmittel beinhalten eine Schulter, die sich von der lasttragenden Oberfläche nach oben erstreckt und eine Flache Unterlegscheibe um den Schaft zum sichernden Eingriff zwischen der Schulter und dem Schaft.

Bei der JP S49 593 U handelt es sich um die Beschreibung einer generischen Klemmvorrichtung, um einen Gegenstand zwischen einem Fuß eines Befestigungselements und einem Anschlag zu klemmen.

Aufgabe der Erfindung ist es daher, eine Vorrichtung zur lösbaren Befestigung eines Stromleiters an einem Stromwandlergehäuse zur Verfügung zu stellen, welche sich durch eine vereinfachtere und schnellere Montage auszeichnet.

Diese Aufgabe wird gelöst durch eine Vorrichtung zur lösbaren Befestigung eines Stromleiters an einem Stromwandlergehäuse, mit dem Stromwandlergehäuse und mit einem Befestigungselement, wobei unmittelbar an dem Stromwandlergehäuse ein Aufnahmeelement angeordnet ist, welches ein Rastelement aufweist, das Befestigungselement durch ein am Stromwandlergehäuse angeordnetes Halteelement geführt ist und in einem befestigten Zustand des Stromleiters an dem Stromwandlergehäuse zumindest teilweise an der Oberfläche des Stromleiters anliegt, das Halteelement an einer seiner Außenseitenflächen Rastmittel aufweist, mittels welcher der Abstand zwischen dem Halteelement und dem Stromleiter einstellbar ist, wobei die Rastmittel in das Rastelement des Aufnahmeelements eingreifen, das Befestigungselement derart ausgebildet ist, dass das Befestigungselement bei der Überführung von einem unbefestigten Zustand in den befestigten Zustand des Stromleiters an dem Stromwandlergehäuse innerhalb des Halteelements entlang seiner Längsachse eine translatorische Bewegung in Richtung des Stromleiters und anschließend eine rotatorische Bewegung um seine Längsachse ausführt, und innerhalb des Halteelements bereichsweise ein Innengewindegang vorgesehen ist, innerhalb welchem ein zumindest bereichsweise an dem Befestigungselement vorgesehener Außengewindegang eingreifen kann.

Das Befestigungselement ist vorzugsweise in Form eines länglichen stiftartigen Elements ausgebildet, welches zur Befestigung des Stromleiters in Richtung entlang seiner Längsachse bewegbar ist. Zur Befestigung des Stromleiters kann das Befestigungselement in Richtung des Stromleiters bewegt werden und zum Lösen des Stromleiters kann das Befestigungselement von dem Stromleiter wegbewegt werden, wobei das Befestigungselement vorzugsweise derart zum Stromleiter angeordnet ist bzw. zum Stromleiter geführt ist, dass die Längsachse des Befestigungselements im Wesentlichen quer zur Längsachse des Stromleiters angeordnet ist. In dem befestigten Zustand, bei welchem der Stromleiter an dem Stromwandlergehäuse fixiert ist, liegt das Befestigungselement vorzugsweise mit seiner Querschnittsfläche auf der Oberfläche des Stromleiters auf. Zur Befestigung des Stromleiters an dem Stromwandlergehäuse wird das Befestigungselement in Richtung des Stromleiters bewegt, wobei die Bewegung zunächst durch eine rein translatorische Bewegung ausgeführt wird und sich an die translatorische Bewegung eine rotatorische Bewegung um die Längsachse des Befestigungselements anschließt, wobei bei der rotatorischen Bewegung zusätzlich eine geringe translatorische Bewegung erfolgen kann. Der größte Weg des Befestigungselements wird dabei vorzugsweise durch die rein translatorische Bewegung zurückgelegt. Die translatorische Bewegung erfolgt dabei vorzugsweise innerhalb des Halteelements, d. h. dass das Befestigungselement bei der translatorischen Bewegung durch das Halteelement geführt wird. Die rotatorische Bewegung des Befestigungselements kann sowohl innerhalb des Halteelements als auch außerhalb des Halteelements erfolgen. Das Halteelement ist vorzugsweise in Form eines Flansches ausgebildet, welches an einer Seitenfläche des Stromwandlergehäuses angeordnet ist. Das Befestigungselement wird dabei vorzugsweise durch eine in dem Halteelement ausgebildete Durchgangsöffnung geführt.

Die erfindungsgemäße Lösung zeichnet sich demzufolge dadurch aus, dass keine rein rotatorische Bewegung des Befestigungselements zum Befestigen eines Stromleiters an einem Stromwandlergehäuse mehr notwendig ist, sondern das Befestigungselement zunächst durch eine rein translatorische Bewegung, bei welcher keine Rotation des Befestigungselements erfolgt, in Richtung des Stromleiters bewegt werden kann. Dadurch ist es möglich, sowohl den Aufwand bei der Montage des Befestigungselements an dem Stromleiter als auch die dabei benötigte Zeit wesentlich zu reduzieren, so dass mit der erfindungsgemäßen Vorrichtung eine Schnellbefestigung eines Stromleiters an einem Stromwandlergehäuse möglich ist. Diese Schnellbefestigung kann dabei vorzugsweise erfolgen, ohne dass ein zusätzliches Werkzeug zur Befestigung notwendig wäre. Um eine gleichmäßige Befestigung zu erzielen, sind an zwei sich gegenüberliegende Seitenflächen des Stromwandlergehäuses vorzugsweise jeweils ein Halteelement und jeweils ein darin angeordnetes, bewegbares erfindungsgemäßes Befestigungselement vorgesehen.

Nach einer vorteilhaften Ausgestaltung der Erfindung ist das Befestigungselement derart ausgebildet, dass das Befestigungselement bei der rotatorischen Bewegung eine Drehbewegung um einen Winkel < 360° um seine Längsachse ausführt. Dadurch, dass eine Drehbewegung um einen Winkel < 360° erfolgt, ist der Aufwand für die rotatorische Bewegung des Befestigungselements äußerst gering. Dadurch ist es möglich, den Aufwand und die Zeit für die Montage eines solchen Befestigungselements weiter zu reduzieren. Das Befestigungselement wird dabei sozusagen einmal um seine Längsachse herumgedreht. Dies ist vorzugsweise möglich, ohne dass ein zusätzliches Werkzeug beispielsweise ein Schraubendreher benötigt werden müsste.

Weiter ist es bevorzugt vorgesehen, dass innerhalb des Halteelements bereichsweise ein Innengewindegang vorgesehen ist, innerhalb welchem ein zumindest bereichsweise an dem Befestigungselement vorgesehener Außengewindegang eingreifen kann. Das Befestigungselement ist dabei vorzugsweise in Form einer Schraube oder eines Gewindestiftes ausgebildet, wobei hierbei vorzugsweise der an dem Befestigungselement vorgesehene Außengewindegang nur in einzelnen Bereichen des Befestigungselements vorgesehen ist und sich nicht über die gesamte Außenumfangsfläche des Befestigungselements erstreckt. Innerhalb des Halteelements bzw. in einer an dem Halteelement vorgesehenen Durchgangsöffnung, durch welche das Befestigungselement hindurchgeführt ist, ist ein Innengewindegang vorzugsweise vorgesehen, welcher ebenfalls nur in bestimmten Bereichen innerhalb dieser Durchgangsöffnung ausgebildet ist, so dass nicht die gesamte Durchgangsöffnung, durch welche das Befestigungselement durch das Halteelement geführt ist, einen Innengewindegang aufweist. Dadurch, dass lediglich ein bestimmter Bereich des Halteelements bzw. des Befestigungselements mit einem Innengewindegang bzw. mit einem Außengewindegang versehen ist, kann die erforderliche rotatorische Bewegung des Befestigungselements wesentlich reduziert werden, wodurch der Montageaufwand und die Montagezeit wesentlich reduziert werden kann.

Der Innengewindegang ist dabei vorzugsweise an einem zusätzlich in das Halteelement einführbares Bauteil ausgebildet. Der Innengewindegang kann dadurch jederzeit ausgetauscht werden, so dass der Innengewindegang beispielsweise an das jeweils verwendete Befestigungselement in Abhängigkeit des an dem Befestigungselement vorgesehenen Außengewindegangs angepasst werden kann. Dadurch kann die Flexibilität der erfindungsgemäßen Vorrichtung wesentlich erhöht werden, da beispielsweise ein Halteelement für unterschiedliche Befestigungselemente verwendet werden kann und dadurch nicht das komplette Halteelement ausgetauscht werden muss bei einem Wechsel der Art des Befestigungselements.

Das zusätzliche Bauteil ist nach einer bevorzugten Ausgestaltung der Erfindung verschiebbar in dem Halteelement anordbar. Beispielsweise kann das zusätzliche Bauteil dabei derart in dem Halteelement vorgesehen sein, dass das zusätzliche Bauteil bzw. der Innengewindegang des zusätzlichen Bauteils in einer ersten Position nicht im Bereich der Durchgangsöffnung in dem Halteelement vorgesehen ist, so dass das durch die Durchgangsöffnung in dem Halteelement durchgeführte Befestigungselement ungehindert eine rein translatorische Bewegung in der Durchgangsöffnung des Halteelements ausführen kann und erst sobald das Befestigungselement einen bestimmten Weg innerhalb des Halteelements zurückgelegt hat, kann das zusätzliche Bauteil derart innerhalb des Halteelements verschoben werden, dass der an dem zusätzlichen Bauteil vorgesehene Innengewindegang in den Außengewindegang des Befestigungselements eingreifen kann. Dadurch ist die Trennung zwischen der translatorischen Bewegung und der rotatorischen Bewegung des Befestigungselements besonders effizient realisierbar.

Nachfolgend wird die Erfindung unter Bezugnahme auf die anliegenden Figuren näher erläutert.

Es zeigen:
- Fig. 1: eine Vorrichtung zur Befestigung eines Stromleiters an einem Stromwandlergehäuse gemäß einer ersten, nicht von den Ansprüchen umfassten Ausführungsform;
- Fig. 2: eine zweite schematische Darstellung der in Fig. 1 gezeigten Vorrichtung in einem unbefestigten Zustand;
- Fig. 3: eine dritte schematische Darstellung der in Fig. 1 gezeigten Vorrichtung, bei welcher ein Befestigungselement in ein Halteelement eingeführt wird;
- Fig. 4: eine vierte schematische Darstellung der in Fig. 1 gezeigten Vorrichtung, bei welcher des in Fig. 3 gezeigte Befestigungselement in dem Halteelement angeordnet ist;
- Fig. 5: eine fünfte schematische Darstellung der in Fig. 1 gezeigten Vorrichtung, bei welcher eine Hülse auf das Halteelement aufgeschoben wird;
- Fig. 6: eine schematische Schnittdarstellung der in Fig. 1 gezeigten Vorrichtung;
- Fig. 7: eine erste schematische Darstellung einer Vorrichtung gemäß einer zweiten, nicht von den Ansprüchen umfassten Ausführungsform;
- Fig. 8: eine zweite schematische Darstellung der in Fig. 7 gezeigten Vorrichtung mit einer Schnittdarstellung des Halteelements ohne eines darin angeordneten Befestigungselements;
- Fig. 9: eine schematische Schnittdarstellung der in Fig. 7 gezeigten Vorrichtung, bei welcher ein Befestigungselement in das Halteelement eingeführt wird;
- Fig. 10: eine schematische Schnittdarstellung der in Fig. 7 gezeigten Vorrichtung in einem befestigten Zustand des Stromleiters an dem Stromwandlergehäuse;
- Fig. 11a: eine erste schematische Darstellung einer Vorrichtung gemäß einer dritten, nicht von den Ansprüchen umfassten Ausführungsform;

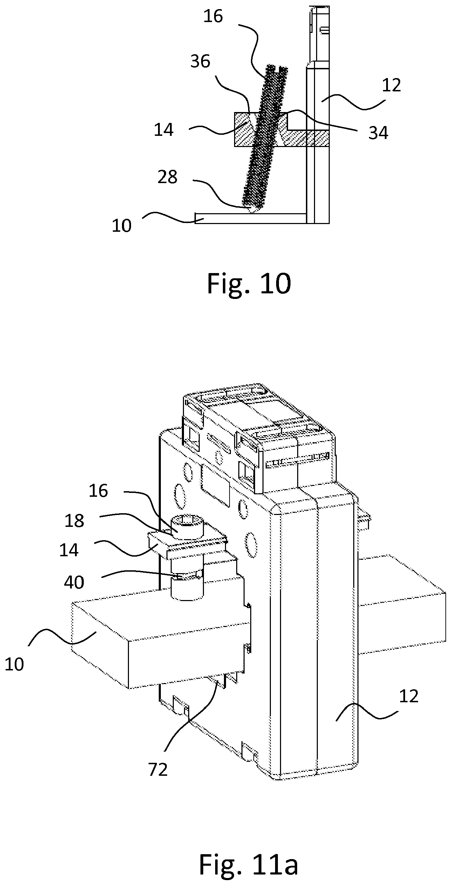

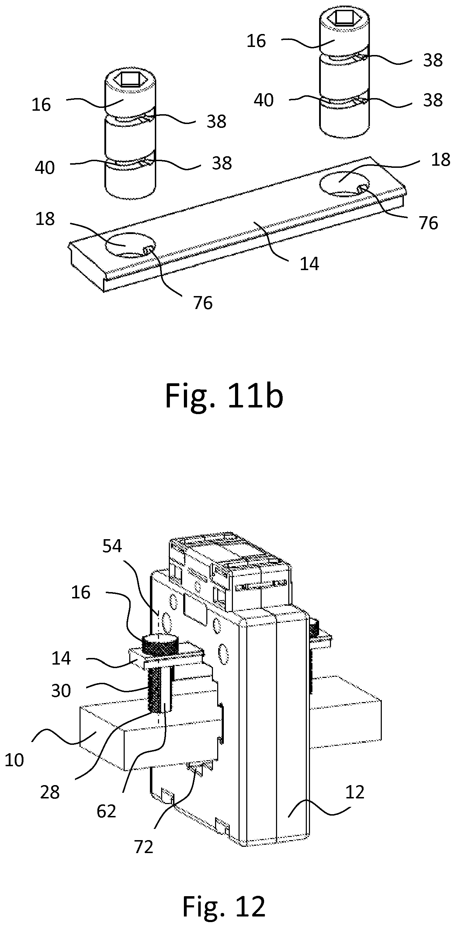

- Fig. 11: b eine zweite schematische Darstellung einer Vorrichtung gemäß einer dritten Ausführungsform;
- Fig. 12: eine schematische Darstellung einer Vorrichtung gemäß einer vierten, nicht von den Ansprüchen umfassten Ausführungsform;

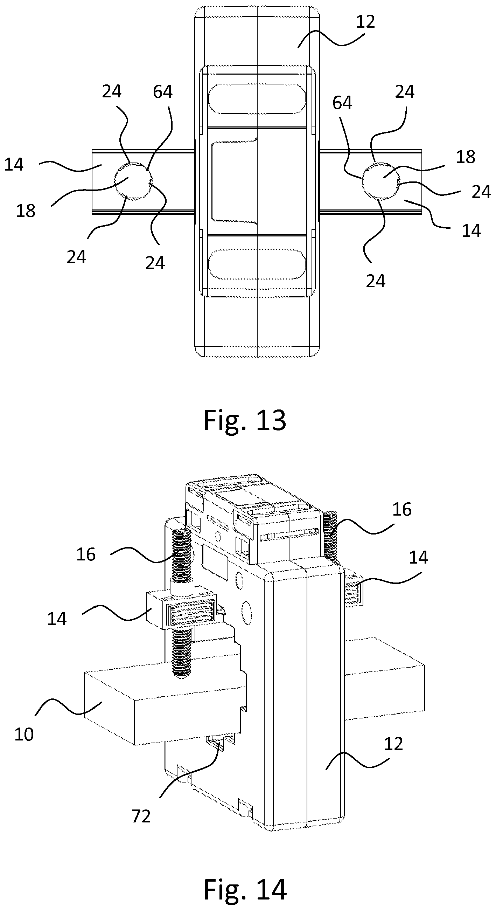

- Fig. 13: eine schematische Draufsicht einer der in Fig. 12 gezeigten Vorrichtung ohne darin angeordnete Befestigungselemente;
- Fig. 14: eine schematische Darstellung einer Vorrichtung gemäß einer fünften, nicht von den Ansprüchen umfassten Ausführungsform;

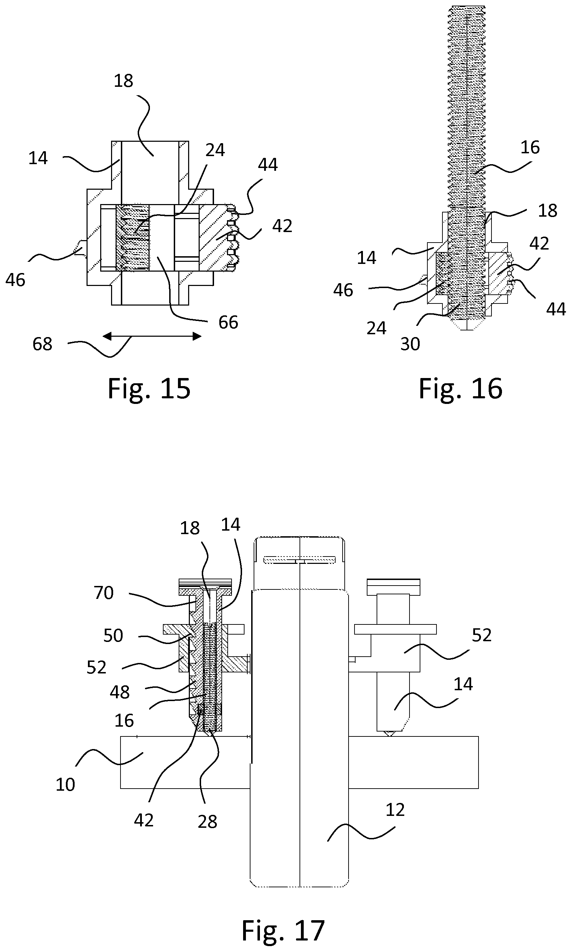

- Fig. 15: eine schematische Schnittdarstellung des Halteelements der in Fig. 14 gezeigten Vorrichtung ohne eines darin angeordneten Befestigungselements;
- Fig. 16: eine weitere schematische Schnittdarstellung des in Fig. 15 gezeigten Halteelements mit einem daran angeordneten Befestigungselement;
- Fig. 17: eine schematische Darstellung einer erfindungsgemäßen Vorrichtung gemäß einer sechsten Ausführungsform, wobei die Vorrichtung teilweise geschnitten dargestellt ist;

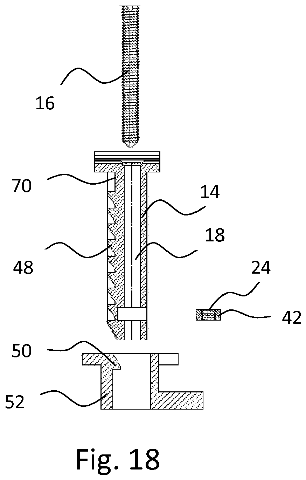

- Fig. 18: eine Explosionsdarstellung der in Fig. 17 gezeigten erfindungsgemäßen Vorrichtung.

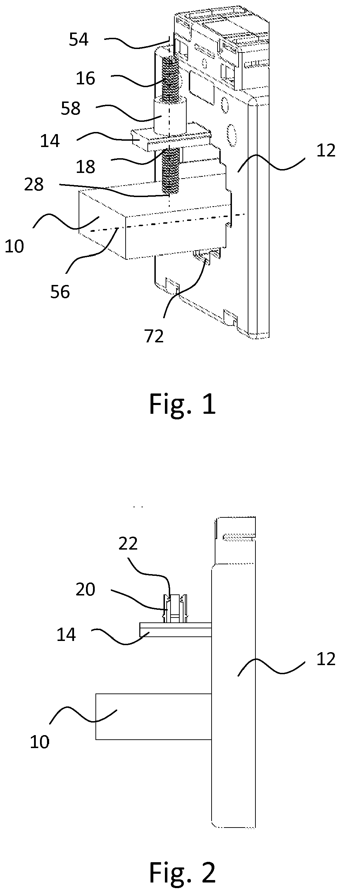

Fig. 1 zeigt eine erste Vorrichtung gemäß einer ersten, nicht von den Ansprüchen umfassten Ausführungsform, bei welcher ein Stromleiter 10 an einem Stromwandlergehäuse 12 befestigt ist, wobei der Stromleiter 10 durch eine an dem Stromwandlergehäuse 12 vorgesehene Durchgangsöffnung 72 hindurchgeführt ist. Hierfür ist an dem Stromwandlergehäuse 12 ein Halteelement 14 und ein zweites hier nicht gezeigtes Halteelement ausgebildet, welche von dem Stromwandlergehäuse abstehen und in Form eines Flansches ausgebildet sind, wobei jeweils ein Befestigungselement 16, welches den Stromleiter 10 an dem Stromwandlergehäuse 12 fixiert, durch das Halteelement 14 hindurchgeführt ist. Das Halteelement 14 kann jeweils sowohl einteilig als auch mehrteilig ausgebildet sein. Das Halteelement 14 weist hierfür eine Durchgangsöffnung 18 auf, durch welche das Befestigungselement 16 hindurchgeführt ist. Das Befestigungselement 16 ist hierbei in Form eines Gewindestiftes ausgebildet, wobei das Befestigungselement 16 mit seiner Längsachse 54 quer zur Längsachse 56 des Stromleiters 10 ausgebildet ist. Im befestigten Zustand, wie dies hier in Fig. 1 gezeigt ist, liegt das Befestigungselement 16 an seinem freien Ende 28 mit seiner Querschnittsfläche auf der Oberfläche des Stromleiters 10 auf.

Die Fig. 2-6 zeigen detailliertere Darstellungen der in Fig. 1 gezeigten Vorrichtung gemäß der ersten Ausführungsform.

In Fig. 2 ist das Halteelement 14 gezeigt, an welchem vier kreisförmig zueinander angeordneten Federarme 20 angeformt sind, an welchen an dem freien Ende der Federarme 20 jeweils ein Rastelement 22 ausgebildet ist, wobei die Rastelemente 22 gewindeähnlich geformt sind, um das Befestigungselement 16 auf der Oberfläche des Stromleiters 10 durch eine rotatorische Bewegung des Befestigungselements 16 vorzugsweise um einen Winkel < 360° fixieren zu können. Dadurch kann das Befestigungselement 16 zunächst durch eine rein translatorische Bewegung in Richtung des Stromleiters 10 durch das Halteelement 14 geführt werden, bevor es zum abschließenden Fixieren eine rotatorische Drehbewegung um einen Winkel < 360° ausführt.

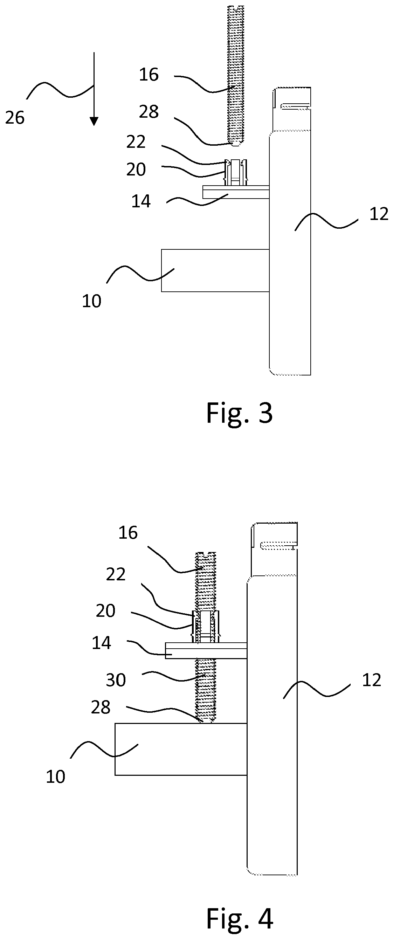

Fig. 3 zeigt eine Darstellung, bei der das Befestigungselement 16 in Richtung des Halteelements 14, mit dem Pfeil 26 dargestellt, bewegt wird. Beim Einführen des Befestigungselement 16 in das Halteelement 14 werden die Federarme 20 des Halteelements 14 auseinander gedrückt, so dass das Befestigungselement 16 durch eine rein translatorische Bewegung soweit durch das Halteelement 14 hindurchgeführt werden kann, bis es mit seinem freien Ende 28 auf der Oberfläche des Stromleiters 10 aufliegt, wie dies in Fig. 4 gezeigt ist.

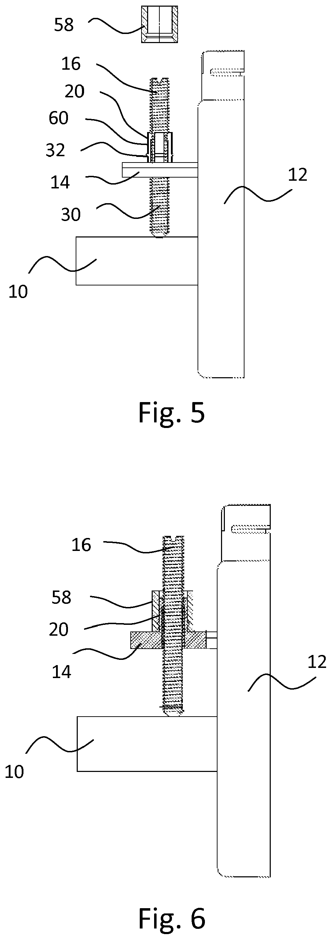

In Fig. 4 ist ferner zu erkennen, dass in diesem Zustand die an den Federarmen 20 vorgesehenen Rastelemente 22 in dem Außengewindegang 30 des Befestigungselements 16 eingreifen. Damit die Federarme 20 das Befestigungselement 16 fixieren können, wird über das Halteelement 14 bzw. die Federarme 20 des Halteelements 14, wie in Fig. 5 gezeigt, eine Hülse 58 übergezogen, welche in an der Außenseite 60 der Federarme 20 des Halteelements 14 angeordneten Rastzapfen 32 eingreifen kann. Mittels der Hülse 58 können die Federarme 20 und die Rastelemente 22 der Federarme 20 in Richtung des Außengewindegangs 30 des Befestigungselements 16 gedrückt werden, so dass die Rastelemente 22 in den Außengewindegang 30 einhaken können und dadurch das Befestigungselement 16 in dieser Position fixieren können.

Fig. 6 zeigt einen Querschnitt, bei welchem die Hülse 58 über die Federarme 20 des Halteelements 14 übergestülpt ist. Um eine endgültige Fixierung des Befestigungselements 16 an dem Stromleiter 10 erreichen zu können, wird das Befestigungselement 16 durch eine rotatorische Bewegung in den Rastelementen 22 des Halteelements 14 bewegt, wobei hierbei vorzugsweise eine Drehbewegung des Befestigungselements 16 um einen Winkel < 360° erfolgt. Die rotatorische Bewegung des Befestigungselements 16 dient hierbei lediglich zur abschließenden Fixierung des Stromleiters 10. Vorher erfolgt eine fast rein translatorische Bewegung des Befestigungselements 16.

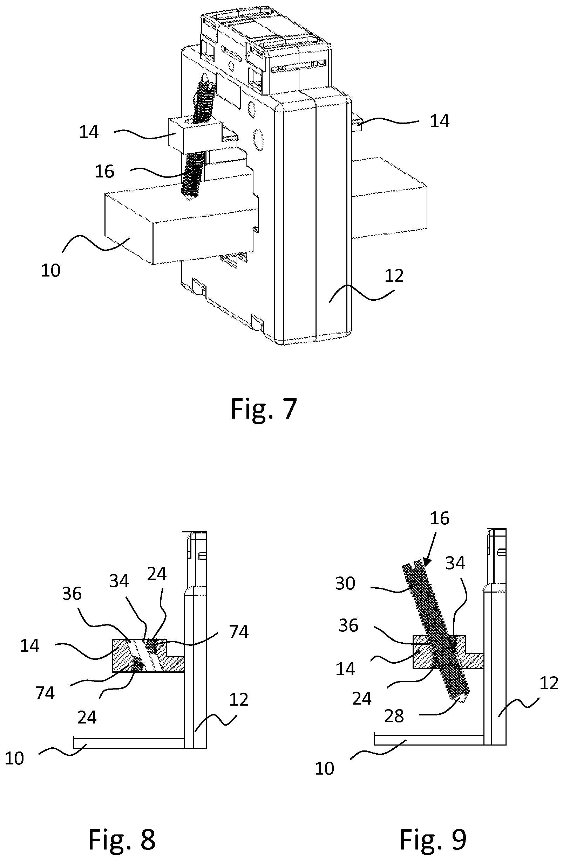

Fig. 7-10 zeigen eine Vorrichtung gemäß einer zweiten, nicht von den Ansprüchen umfassten Ausführungsform, bei welcher ein Befestigungselement 16 in Form eines Gewindestiftes durch ein Halterungselement 14 hindurchgeführt ist, um den Stromleiter 10 an dem Stromwandlergehäuse 12 zu befestigen.

Wie in der in Fig. 8 gezeigten Schnittdarstellung des Halteelements 14 weist das Halteelement 14 eine erste Durchgangsöffnung 34 und eine zweite Durchgangsöffnung 36 auf, wobei die erste Durchgangsöffnung 34 und die zweite Durchgangsöffnung 36 über Kreuz zueinander angeordnet sind, vorzugsweise in einem Winkel zwischen 15° und 20° zueinander versetzt angeordnet sind. Die erste Durchgangsöffnung 34 weist dabei einen Innengewindegang 24 auf, welcher vorzugsweise jeweils nur an einer Seitenfläche 74 der ersten Durchgangsöffnung 34 ausgebildet ist, wobei diese Seitenfläche 74 nach dem Übergang der ersten Durchgangsöffnung 34 durch die zweite Durchgangsöffnung 36 wechselt.

Zur Fixierung oder zur Befestigung des Stromleiters 10 wird, wie in Fig. 9 gezeigt, das Befestigungselement 16 zunächst durch die zweite Durchgangsöffnung 36 durch eine rein translatorische Bewegung hindurchgeführt, bis es mit seinem freien Ende 28 auf der Oberfläche des Stromleiters 10 aufliegt. Sobald das Befestigungselement 16 die Oberfläche des Stromleiters 10 berührt, wird das Befestigungselement 16 innerhalb des Halteelements 14 von der zweiten Durchgangsöffnung 36 in die erste Durchgangsöffnung 34 verschwenkt, so dass der Außengewindegang 30 des Befestigungselements 16 in den Innengewindegang 24 der ersten Durchgangsöffnung 34 eingreifen kann. Durch eine rotatorische Bewegung des Befestigungselements 16 kann nun das Befestigungselement 16 den Stromleiter 10 an dem Stromwandlergehäuse 12 fest fixieren, wobei hierbei lediglich eine kurze Drehbewegung des Befestigungselements 16, vorzugsweise um einen Winkel < 360°, erforderlich ist.

Diese endgültige Position ist in Fig. 10 gezeigt. Dabei erfolgt eine Verschwenkbewegung des Befestigungselements 16 vorzugsweise um einen Winkel von ungefähr 15° von der ersten Durchgangsöffnung 34 zur zweiten Durchgangsöffnung 36.

Fig. 11a und 11b zeigen eine Vorrichtung gemäß einer dritten, nicht von den Ansprüchen umfassten Ausführungsform, wobei hierbei das Befestigungselement 16 mit dem Halteelement 14 in Form eines Bajonettverschlusses verbunden wird. Dafür wird zunächst das Befestigungselement 16 durch eine rein translatorische Bewegung durch eine Durchgangsöffnung 18 des Halteelements 14 geführt. In der Durchgangsöffnung 18 ist ein Stift 76 vorgesehen, welcher entlang einer gewindeartigen Führung 40 an dem Befestigungselement 16 geführt wird, bevor er durch eine rotatorische Bewegung des Befestigungselement 16 in eine Einkerbung 38 innerhalb der gewindeartigen Führung 40 einrasten kann, um eine abschließende Fixierung des Befestigungselements 16 auf der Oberfläche der Stromschiene 10 bewirken zu können. Vorzugsweise sind hierbei pro Befestigungselement 16 mehr als ein Bajonettverschluss vorgesehen.

Fig. 12 und 13 zeigen eine weitere Vorrichtung gemäß einer vierten, nicht von den Ansprüchen umfassten Ausführungsform, wobei hierbei das Befestigungselement 16 in Form einer Schraube ausgeführt ist, wobei das Befestigungselement 16 einen Außengewindegang 30 aufweist, welcher lediglich in einem bestimmten Bereich an dem Befestigungselement 16 vorgesehen ist. Der Außengewindegang 30 wird hierbei durch ein oder mehrere Bereiche 62 unterbrochen, wobei diese Bereiche 62 sich über die gesamte Längsseite des Befestigungselements 16 erstrecken. Der oder die Außengewindegänge 30 sind demnach vorzugsweise lediglich um einen Winkel von 20°-180°, bevorzugt von 45°-90°, um die Längsachse 54 des Befestigungselements 16 ausgebildet.

Fig. 13 zeigt eine Draufsicht auf die in Fig. 12 gezeigte Vorrichtung ohne ein darin angeordnetes Befestigungselement 16, wobei hierbei das Halteelement 14 erkennbar ist, welches eine Durchgangsöffnung 18 zur Aufnahme des Befestigungselements 16 aufweist, wobei die Durchgangsöffnung 18 einen Innengewindegang 24 aufweist, welcher lediglich bereichsweise innerhalb der Durchgangsöffnung 18 vorgesehen ist. Hierbei sind drei Abschnitte eines Innengewindegangs 24 vorgesehen, wobei diese drei Abschnitte sich jeweils vorzugsweise lediglich um einen Winkel von 20°-180°, bevorzugt von 45°-90°, um die Innenumfangsfläche 64 der Durchgangsöffnung 18 erstrecken. Bei der Durchführung des Befestigungselements 16 durch das Halteelement 14 wird dabei das Befestigungselement 16 vorzugsweise derart in das Halteelement 14 eingefügt, dass der in Fig. 12 gezeigte Bereich 62, an welchem kein Außengewindegang 30 vorgesehen ist, entlang der Innenumfangsfläche 64 der Durchgangsöffnung 18 des Halteelements 14 entlanggeführt wird, an welcher der Innengewindegang 24 vorgesehen ist. Erst sobald das Befestigungselement 16 mit seinem freien Ende 28 auf dem Stromleiter 10 aufliegt, wird der Außengewindegang 30 des Befestigungselements 16 in den Innengewindegang 24 des Halteelements 14 eingedreht, so dass das Befestigungselement 16 lediglich noch eine Drehbewegung bzw. eine rotatorische Bewegung um einen Winkel von vorzugsweise < 360° zurücklegen muss, um eine endgültige Fixierung des Stromleiters 10 an dem Stromwandlergehäuse 12 erreichen zu können.

Fig. 14-16 zeigen eine Vorrichtung gemäß einer fünften, nicht von den Ansprüchen umfassten Ausführungsform, bei welcher ein in Form eines Gewindestifts ausgebildetes Befestigungselement 16 durch ein Halteelement 14 geführt ist.

Wie in Fig. 15 zu erkennen ist, weist das Halteelement 14 eine Durchgangsöffnung 18 auf, wobei im Bereich der Durchgangsöffnung 18 an dem Halteelement 14 ein zusätzliches Bauteil 42 eingesetzt ist, welches ebenfalls eine Durchgangsöffnung 66 und einen darin zumindest bereichsweise angeordneten Innengewindegang 24 aufweist. Das zusätzliche Bauteil 42 ist dabei innerhalb des Halteelements 14 verschiebbar entlang des Pfeils 68 angeordnet. Das zusätzliche Bauteil 42 kann dabei über eine außerhalb des Halteelements 14 vorgesehene Betätigungsfläche 44 betätigt bzw. verschoben werden. In Fig. 15 ist das Halteelement 14 derart dargestellt, dass kein Befestigungselement 16 hindurchgeführt ist.

Fig. 16 zeigt das Halteelement 14, wobei ein Befestigungselement 16 durch die Durchgangsöffnung 18 des Halteelements 14 hindurchgeführt ist. Zum Einführen des Befestigungselements 16 wird das zusätzliche Bauteil 42 dabei, wie hier gezeigt, soweit nach links bewegt, dass das Befestigungselement 16 frei durch die Durchgangsöffnung 18 das Halteelement 14 und die Durchgangsöffnung 66 des zusätzlichen Bauteils 42 durchgeführt werden kann, ohne dass das Befestigungselement 16 in den Innengewindegang 24 des zusätzlichen Bauteils 42 eingreift, bis das Befestigungselement 16 mit seinem freien Ende 28 auf der Oberfläche des Stromleiters 10 aufliegt. Sobald das Befestigungselement 16 auf dem Stromleiter 10 aufliegt, wird das zusätzliche Bauteil 42 soweit nach rechts bewegt, dass der Innengewindegang 24 des zusätzlichen Bauteils 42 das Befestigungselement 16 in seiner Position fixieren kann. Das zusätzliche Bauteil 42 ist vorzugsweise mit einer Feder, hier nicht gezeigt, ausgebildet, so dass das zusätzliche Bauteil 42 über die Betätigungsfläche 44 unter einer Vorspannkraft hin und her bewegbar ist. Zum Lösen des Befestigungselements 16 kann das zusätzliche Bauteil 42 us dem in Fig. 16 gezeigten befestigten Zustand zurück nach links bewegt werden kann und dadurch der Innengewindegang 24 aus dem Außengewindegang 30 ausgehakt werden und das Befestigungselement 16 dadurch wieder aus der Durchgangsöffnung 18 des Halteelements 14 hinausgeführt werden.

In den Fig. 17 und 18 sind eine erfindungsgemäße Vorrichtung gemäß einer sechsten Ausführungsform gezeigt, wobei hierbei das Befestigungselement 16 in Form eines Gewindestiftes durch eine an einem Halteelement 14 vorgesehene Durchgangsöffnung 18 hindurchgeführt ist, wobei das Halteelement 14 an seiner Außenseitenfläche 70 Rastmittel 48 aufweist. Das Befestigungselement 16 ist hierbei vorzugsweise bereits in dem Halteelement 14 vormontiert. Das Halteelement 14 ist dabei derart ausgestaltet, dass es eine translatorische Bewegung in Richtung des Stromleiters 10 und von dem Stromleiter 10 weg ausführen kann, so dass der Abstand zwischen dem Halteelement 14 und dem Stromleiter 10 einstellbar ist. Hierfür greifen die Rastmittel 48 in ein Rastelement 50 eines Aufnahmeelements 52 ein, wobei das Aufnahmeelement 52 unmittelbar an dem Stromwandlergehäuse 12 angeordnet ist.

Zur Befestigung des Stromleiters 10 wird bei dieser Ausführungsform zunächst das Halteelement 14 mittels seiner Rastmittel 48 soweit in Richtung des Stromleiters 10 bewegt, bis das Halteelement 14 vorzugsweise auf der Oberfläche des Stromleiters 10 aufliegt. Sobald das Halteelement 14 auf dem Stromleiter 10 aufliegt, wird das Befestigungselement 16 zunächst durch eine translatorische Bewegung in dem Halteelement 14 in Richtung des Stromleiters 10 geführt bis das Befestigungselement 16 in ein indem Halteelement 14 vorgesehenes zusätzliches Bauteil 42 mit einem Innengewindegang 24 eingreift. Das zusätzliche Bauteil 42 kann separat oder als fester Bestandteil des Halteelements 14, vorzugsweise einstückig mit dem Halteelement 14, ausgebildet sein. Durch eine rotatorische Bewegung des Befestigungselements 16 in Richtung des Stromleiters 10 durch Eingreifen des Außengewindegangs 30 des Befestigungselements 16 in den Innengewindegang 24 des zusätzlichen Bauteils 42 wird der Stromleiter 10 zusätzlich zu dem Halteelement 14 durch das Befestigungselement 16 fixiert, welches mit seinem freien Ende 28 auf der Oberfläche des Stromleiters 10 aufliegt.

Fig. 18 zeigt die in Fig. 17 gezeigte Ausführungsform in einer Explosionsdarstellung, wobei die einzelnen Elemente hierbei einzeln dargestellt sind und dabei zu erkennen ist, dass der Innengewindegang 24 vorzugsweise in einem zusätzlichen Bauteil 42 ausgebildet ist, welches in das Halteelement 14 zusätzlich eingefügt ist.

**Bezugszeichenliste**

| | |
|---|---|
| Stromleiter | 10 |
| Stromwandlergehäuse | 12 |
| Halteelement | 14 |
| Befestigungselement | 16 |
| Durchgangsöffnung | 18 |
| Federarm | 20 |
| Rastelement | 22 |
| Innengewindegang | 24 |
| Pfeil | 26 |
| Freies Ende | 28 |
| Außengewindegang | 30 |
| Rastzapfen | 32 |
| Erste Durchgangsöffnung | 34 |
| Zweite Durchgangsöffnung | 36 |
| Einkerbung | 38 |
| gewindeartige Führung | 40 |
| Zusätzliches Bauteil | 42 |
| Betätigungsfläche | 44 |
| Betätigungselement | 46 |
| Rastmittel | 48 |
| Rastelement | 50 |
| Aufnahmeelement | 52 |
| Längsachse | 54 |
| Längsachse | 56 |
| Hülse | 58 |
| Außenseite | 60 |
| Bereich | 62 |
| Innenumfangsfläche | 64 |
| Durchgangsfläche | 66 |
| Pfeil | 68 |
| Außenseitenfläche | 70 |
| Durchgangsöffnung | 72 |
| Seitenfläche | 74 |
| Stift | 76 |

## Patentansprüche

1. Vorrichtung zur lösbaren Befestigung eines Stromleiters (10) an einem Stromwandlergehäuse (12), mit dem Stromwandlergehäuse (12) und mit einem Befestigungselement (16), wobei
das Befestigungselement (16) durch ein am Stromwandlergehäuse (12) angeordnetes Halteelement (14) geführt ist und in einem befestigten Zustand des Stromleiters (10) an dem Stromwandlergehäuse (12) zumindest teilweise an der Oberfläche des Stromleiters (10) anliegt, und
das Befestigungselement (16) derart ausgebildet ist, dass das Befestigungselement (16) bei der Überführung von einem unbefestigten Zustand in den befestigten Zustand des Stromleiters (10) an dem Stromwandlergehäuse (12) innerhalb des Halteelements (14) entlang seiner Längsachse (54) eine rotatorische Bewegung um seine Längsachse (54) ausführt,
**dadurch gekennzeichnet, dass**
unmittelbar an dem Stromwandlergehäuse (12) ein Aufnahmeelement (52) angeordnet ist, welches ein Rastelement (50) aufweist,
das Halteelement (14) an einer seiner Außenseitenflächen (70) Rastmittel (48) aufweist, mittels welcher der Abstand zwischen dem Halteelement (14) und dem Stromleiter (10) einstellbar ist, wobei die Rastmittel (48) in das Rastelement (50) des Aufnahmeelements (52) eingreifen,
das Befestigungselement (16) derart ausgebildet ist, dass das Befestigungselement (16) bei der Überführung von einem unbefestigten Zustand in den befestigten Zustand des Stromleiters (10) an dem Stromwandlergehäuse (12) innerhalb des Halteelements (14) entlang seiner Längsachse (54) eine translatorische Bewegung in Richtung des Stromleiters (10) und anschließend die rotatorische Bewegung um seine Längsachse (54) ausführt, und
innerhalb des Halteelements (14) bereichsweise ein Innengewindegang (24) vorgesehen ist, innerhalb welchem ein zumindest bereichsweise an dem Befestigungselement (16) vorgesehener Außengewindegang (30) eingreifen kann.

2. Vorrichtung nach Anspruch 1, wobei das Befestigungselement (16) derart ausgebildet ist, dass das Befestigungselement (16) bei der rotatorischen Bewegung eine Drehbewegung um einen Winkel < 360° um seine Längsachse (54) ausführt.

3. Vorrichtung nach einem der Ansprüche 1 oder 2, wobei der Innengewindegang (24) an einem zusätzlich in das Halteelement (14) einführbaren Bauteil (42) ausgebildet ist.

4. Vorrichtung nach Anspruch 3, wobei das zusätzliche Bauteil (42) verschiebbar in dem Halteelement (14) anordbar ist.

## Claims

1. A device for detachably fastening a conductor (10) to a transformer housing (12), comprising the transformer housing (12) and a fastening element (16), wherein
the fastening element (16) is routed through a retaining element (14) arranged on the transformer housing (12) and rests at least partially on the surface of the conductor (10) when the conductor (10) is fastened to the transformer housing (12), and
the fastening element (16) is designed in such a way that the fastening element (16), during the transfer from an unfastened state into the fastened state of the conductor (10) on the transformer housing (12) within the retaining element (14) along its longitudinal axis, performs a rotational movement about its longitudinal axis (54),
**characterised in that**
a mounting element (52) is arranged directly on the transformer housing (12) and has a latch element (50),
the retaining element (14) has latch means (48) on one of its outer-side faces (70), by means of which latch means the distance between the retaining element (14) and the conductor (10) is adjustable, wherein the latch means (48) engage in the latch element (50) of the mounting element (52),
the fastening element (16) is designed in such a way that the fastening element (16), during the transfer from an unfastened state into the fastened state of the conductor (10) on the transformer housing (12) within the retaining element (14), performs a translational movement along its longitudinal axis (54) in the direction of the conductor (10) and then performs the rotational movement about its longitudinal axis (54), and
an inner thread (24) is provided in some regions within the retaining element (14), and an outer thread (30) provided at least in some regions on the fastening element (16) can engage within said inner thread.

2. The device according to claim 1, wherein the fastening element (16) is designed in such a way that the fastening element (16) performs a twisting movement through an angle of < 360° about its longitudinal axis (54) during the rotational movement.

3. The device according to one of clams 1 or 2, wherein the inner thread (24) is provided on a component (42) that additionally is insertable into the retaining element (14).

4. The device according to claim 3, wherein the additional component (42) is arrangeable displaceably in the retaining element (14).

## Revendications

1. Dispositif de fixation amovible d'un conducteur électrique (10) à un boîtier de transformateur (12), doté du boitier de transformateur (12) et d'un élément de fixation (16), où
l'élément de fixation (16) traverse un élément support (14) disposé sur le boitier de transformateur (12) et est plaqué contre le boitier de transformateur (12) au moins partiellement sur la surface du conducteur électrique (10), dans un état fixé du conducteur électrique (10), et
l'élément de fixation (16) est conçu de manière à ce que l'élément de fixation (16), lors du passage d'un état non fixé à l'état fixé du conducteur électrique (10) sur le boitier de transformateur (12) à l'intérieur de l'élément support (14) le long de son axe longitudinal (54), effectue un mouvement de rotation autour de son axe longitudinal (54),
**caractérisé en ce**
**qu'**un élément de réception (52), lequel présente un élément de verrouillage (50), est disposé directement sur le boitier de transformateur (12),
l'élément support (14) présentent des systèmes de verrouillage (48) au niveau d'une de ses surfaces latérales extérieures (70), au moyen desquels la distance entre l'élément support (14) et le conducteur électrique (10) peut être réglée, où les systèmes de verrouillage (48) se mettent en prise dans l'élément de verrouillage (50) de l'élément de réception (52),
l'élément de fixation (16) est conçu de manière à ce que l'élément de fixation (16), lors du passage d'un état non fixé à l'état fixé du conducteur électrique (10) sur le boitier du transformateur (12) à l'intérieur de l'élément support (14) le long de son axe longitudinal (54), effectue un mouvement de translation en direction du conducteur électrique (10) et ensuite un mouvement de rotation autour de son axe longitudinal (54), et
un pas de filetage intérieur (24) est prévu à l'intérieur de l'élément support (14), dans lequel un pas de filetage extérieur (30), prévu sur l'élément de fixation (16), peut se mettre en prise au moins par endroits.

2. Dispositif selon la revendication 1, dans lequel l'élément de fixation (16) est conçu de manière à ce que l'élément de fixation (16) effectue un mouvement de rotation d'un angle > 360 ° autour de son axe longitudinal (54) lors du mouvement de rotation.

3. Dispositif selon l'une des revendications 1 ou 2, dans lequel le pas de filetage intérieur (24) est formé de manière complémentaire dans un composant (42) pouvant être inséré dans l'élément support (14).

4. Dispositif selon la revendication 3, dans lequel le composant (42) complémentaire peut être disposé coulissable dans l'élément support (14).
